# EUROPÄISCHE PATENTSCHRIFT

(11) **EP 0 426 670 B1**
(45) Veröffentlichungstag und Bekanntmachung des Hinweises auf die Patenterteilung: **09.06.1993**
(21) Anmeldenummer: 89903457.3
(22) Anmeldetag: 22.03.1989
(51) Int. Cl.: F16N 11/10, H01M 6/26, H01M 6/50

(54) **GASENTWICKELNDES GALVANISCHES ELEMENT**
GAS-GENERATING GALVANIC ELEMENT
ELEMENT GALVANIQUE GENERATEUR DE GAZ

(30) Priorität: 06.04.1988 DE 3811470
(43) Veröffentlichungstag der Anmeldung: 15.05.1991
(73) Patentinhaber: Satzinger GmbH & Co., 97717 Euerdorf (DE)
(72) Erfinder: JORISSEN, Bernd, D-8737 Euerdorf (DE)
(74) Vertreter: Metzler, Jürgen, Dipl.-Ing.
(86) Internationale Anmeldenummer: DE8900183
(87) Internationale Veröffentlichungsnummer: WO8909908

(56) Entgegenhaltungen:
- DE-A- 2 431 552
- DE-A- 2 520 241
- DE-A- 3 532 335
- US-A- 3 308 046

## Beschreibung

Gegenstand der vorliegenden Erfindung ist ein gasentwickelndes galvanisches Element nach dem Oberbegriff von Anspruch 1.

Bei den bekannten galvanischen Elementen ist in eine zentrale Bohrung einer Ronde aus Zink ein zylindrischer Stab aus Molybdän oder einem anderen eine Kathode bildenden Werkstoff eingesetzt. Dieses Element wird einem Elektrolyten ausgesetzt, wobei durch einen elektrochemischen Prozeß an der Kathode kontinuierlich eine gewisse Gasmenge erzeugt wird, die beispielsweise in einer Schmierstoffbüchse zum kontinuierlichen Ausstoß einer bestimmten Schmierstoffmenge aus einem Schmierstoff-Vorratsraum dient (DE-PS 1256001). Bei diesem bekannten Element bestimmt die dem Elektrolyten zugängliche Fläche der Kathode die Menge des erzeugten Gases, wobei die Umgebungsbedingungen, wie z. B. die Temperatur, ebenfalls von Einfluß sind.

Es ist eine Schmierbüchse bekannt, in der ein gasentwickelndes galvanisches Element in Form einer Zelle verwendet wird, die aus einer Kathode und einer Anode und einem zwischen Kathode und Anode angeordneten regelbaren Widerstand besteht. Dieses bekannte Element ist in Sandwich-Bauweise ausgebildet und weist eine Anode aus Zink, eine absorbierende Isolierschicht aus Papier oder Baumwolle, einer mit einem Elektrolyten getränkten Paste und eine Kathode in Form eines Drahtnetzes auf. An diese Zelle ist ein Stromkreis angelegt, in dem ein regelbarer Widerstand angeordnet ist (DE-A-2520241). Bei dieser bekannten Ausführung ist keine kompakte Einheit aus Anode, Kathode und Widerstand gegeben, wobei die Einzelteile beliebig zusammensetzbar sind.

Schließlich ist eine galvanische Zelle zur Entwicklung von Wasserstoff bzw. Sauerstoff bekannt, bei der die Anode aus Zinkpulver und die Kathode aus einer Raney-Nickel-Pulverschicht besteht, die in ein Nickelnetz eingewalzt ist (DE-A-3532335). Bei dieser bekannten Zelle ist kein regelbarer Widerstand vorgesehen.

Die vorliegende Erfindung hat sich zur Aufgabe gestellt, ein gasentwickelndes galvanisches Element zu schaffen, bei dem die Menge des erzeugten Gases je Zeiteinheit unabhängig von der Oberfläche der dem Elektrolyten ausgesetzten Kathode und darüber hinaus auch die Gesamtmenge des erzeugten Gases eingestellt und geregelt werden kann. Ebenfalls wird der Temperatureinfluß auf die Gasmenge pro Zeiteinheit reduziert.

Diese Aufgabe wird nach der vorliegenden Erfindung durch die im kennzeichnenden Teil des Anspruchs 1 beschriebenen Merkmale gelöst.

Die Anode wird in Form einer erneuerbaren Tablette ausgebildet, wobei die Menge des Anodenmaterials entsprechend der gewünschten Gasmenge gewählt wird.

Die Kathode ist in Form eines Plättchens oder einer Folie ausgebildet, es genügt in vielen Fällen auch ein Überzug über einen entsprechend ausgebildeten Träger.

Durch die Anordnung eines Widerstandes zwischen Kathode und Anode kann entsprechend der Ausbildung des Widerstandes eine ganz bestimmte Gasmenge pro Zeiteinheit erzeugt werden. es besteht also die Möglichkeit, dem Anwendungsfall entsprechend einen bestimmten Widerstand auszuwählen. Die Anode und Kathode sind jeweils unmittelbar an einem anderen Ende des Widerstandes befestigt, sodaß ein kompaktes Element entsteht.

Die Anode wird - gemäß Anspruch 2 - zweckmäßigerweise aus Zink und die Kathode aus einem Material mit geringer Wasserstoffüberspannung ausgebildet. Das ist vorzugsweise Raney-Nickel oder Nickel, Platin od. dgl. Die Verwendung von Zink als Anode hat den Vorteil, daß die Menge des Zinkes entsprechend der gewünschten Gasmenge insgesamt gewählt werden kann. Bei einem Verbrauch der vorgesehenen Zinkmenge kann eine neue Zinktablette angeordnet, d. h. also das Element selbst wieder regeneriert werden. Wenn wie in Anspruch 2 angegeben, der Widerstand regelbar ausgebildet ist, dann können mit ein und demselben Widerstand unterschiedliche Gasmengen erzeugt werden.

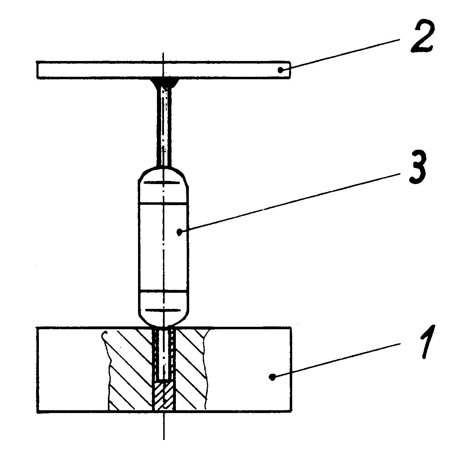

Ein Ausführungsbeispiel der Erfindung ist in der beiliegenden Zeichnung dargestellt und soll nachstehend näher beschrieben werden.

Die einzige Figur zeigt das Element, das aus Anode 1 aus Zink in Form einer Tablette ausgebildet, aus der Kathode 2 aus Raney-Nickel in Form eines Plättchens sowie aus dem zwischen Anode 1 und Kathode 2 angeordneten Widerstand 3 besteht. Die einzelnen Teile sind unmittelbar miteinander verbunden.

Wird dieses Element in einem (nicht gezeigten) Elektrolyten gegeben, so entsteht eine chemische Reaktion, wobei das Zink der Anode 1 sich auflöst und an der Kathode 2 Gas entsteht, das sich in einem Raum sammelt und dann wie beispielsweise in der Einleitung beschrieben zum kontinuierlichen Ausstoß von Schmiermittel od. dgl. verwendet wird.

Je nach der gewünschten Gasmenge je Zeiteinheit wird ein entsprechender Widerstand 3 gewählt oder eingestellt. Je nach der gewünschten Gasmenge insgesamt wird die Menge des Zinkes der Anode 1 gewählt, so daß jedes Element den besonderen Einsatzbedingungen entsprechend angepaßt werden kann. Das Element ist weiterhin nachrüst- oder regenierbar, indem die Zinktablette erneuert wird.

## Patentansprüche

1. Aus einer Anode (1) und einer Kathode (2) und einem mit Anode (1) und Kathode (2) elektrisch verbundenen Widerstand (3) bestehendes galvanisches Element, das bei Benutzung mit einem Elektrolyten eine bestimmte Menge Gas erzeugt, dadurch gekennzeichnet, daß die Anode (1) in Form einer erneuerbaren Tablette und die Kathode (2) in Form eines Plättchens oder einer Folie ausgebildet ist, die jeweils unmittelbar an einem anderen Ende des zwischengeschalteten Widerstands (3) befestigt sind, wobei die einzelnen Teile (1,2,3) des Elementes dem Anwendungsfall entsprechend gewählt oder eingestellt sind.

2. Galvanisches Element nach Anspruch 1, dadurch gekennzeichnet, daß die Anode (1) aus Zink und die Kathode (2) aus Raney-Nickel gebildet ist.

3. Galvanisches Element nach Anspruch 1 oder 2, dadurch gekennzeichnet, daß der Widerstand (3) regelbar ist.

## Claims

1. A galvanic element comprising an anode (1) and a cathode (2) and a resistor (3) electrically connected with the anode (1) and the cathode (2), which galvanic element produces a given quantity of gas when used with an electrolyte, characterised in that the anode (1) is in the form of a replaceable pellet and the cathode (2) is in the form of a small plate or a foil, which are each fastened directly to a different end of the interposed resistor (3), the individual parts (1, 2, 3) of the element being selected or adjusted in accordance with the particular application.

2. A galvanic element according to Claim 1, characterised in that the anode (1) is formed from zinc and the cathode (2) from Raney nickel.

3. A galvanic element according to Claim 1 or Claim 2, characterised in that the resistor (3) is variable.

## Revendications

1. Elément galvanique composé d'une anode (1) et d'une cathode (2) et d'une résistance (3) reliée électriquement à l'anode (1) et la cathode (2) qui, lors de l'utilisation avec un électrolyte, génère une quantité de gaz déterminée, caractérisé en ce que l'anode (1) se présente sous forme d'une tablette renouvelable et la cathode (2) sous forme d'une plaquette ou d'un film, lesquelles sont, chacune, fixées directement à une autre extrémité de la résistance (3) intercalée, les différentes parties (1,2,3) de l'élément étant choisies ou réglées en fonction de l'application.

2. Elément galvanique suivant la revendication 1, caractérisé en ce que l'anode (1) est réalisée en zinc et la cathode (2) en nickel de Raney.

3. Elément galvanique suivant la revendication 1 ou 2, caractérisé en ce que la résistance (3) est réglable.
